# EUROPÄISCHE PATENTSCHRIFT

(11) **EP 3 331 667 B1**
(45) Veröffentlichungstag und Bekanntmachung des Hinweises auf die Patenterteilung: **26.01.2022**
(21) Anmeldenummer: 16759675.8
(22) Anmeldetag: 06.08.2016
(51) Int. Cl.: B25J 9/08, B25J 15/02, B25J 15/04, B25J 15/10

(54) **GREIFVORRICHTUNGSMODULSYSTEM**
GRIPPER DEVICE MODULE SYSTEM
SYSTÈME DE MODULE DE DISPOSITIF DE PRÉHENSION

(30) Priorität: 07.08.2015 DE 102015010046
(43) Veröffentlichungstag der Anmeldung: 13.06.2018
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2016/000304
(87) Internationale Veröffentlichungsnummer: WO 2017/025076

(56) Entgegenhaltungen:
- EP-A1- 0 274 056
- JP-A- H04 189 489
- JP-A- S63 102 886
- US-A- 4 596 415

## Beschreibung

Die Erfindung betrifft ein Greifvorrichtungsmodulsystem mit verschiedenen Greifeinheiten, wobei jede Greifeinheit mit mindestens zwei aufeinander zubewegbaren - auf Schlitten oder Greifelementeträgern angeordneten - Greifelementen ausgestattet ist, von denen mindestens ein Greifelement mittels eines Antriebs in eine oder zwei Richtungen bewegbar ist und wobei der Antrieb mindestens ein Getriebe umfasst.

Aus der EP 1 905 549 B1 ist eine Parallelgreifvorrichtung bekannt, bei der in einem einteiligen Gehäuse als Antrieb ein Elektromotor mit drei nachgeschalteten Getrieben untergebracht ist. Bei dieser Vorrichtung sind im Gehäuse zwei Schlitten gelagert, die die Greifelemente tragen.

Die JP H04 189 489 A beschreibt einen Parallelgreifer. Er besteht aus einem Manipulatorgehäuse und einer Manipulatorhand. Die Manipulatorhand weist zwei Greifelemente auf. Das Manipulatorgehäuse und die Manipulatorhand sind über eine mechanische Schnittstelle verbunden. Dazu weist das Manipulatorgehäuse einen zentralen vorstehenden Mitnehmerzapfen auf, der in eine zentrale Mitnehmerausnehmung der Manipulatorhand eingreift, sofern die Manipulatorhand am Manipulatorgehäuse angekoppelt ist. Zum Ankuppeln weist das Manipulatorgehäuse zwei einander gegenüberliegende Kupplungshaken auf, die beim Kuppeln in entsprechende Ausnehmungen der Manipulatorhand eingreifen, um Letztere gegen das Manipulatorgehäuse zu ziehen.

Aus der EP 0 274 056 A1 ist ein Robotergreifer bekannt, der aus einer separaten Antriebseinheit mit einem stirnseitigen Stößel und einem separat angeflanschten Fingergetriebe besteht. Der aus der Antriebseinheit herausfahrende Stößel betätigt im Fingergetriebe einen Mechanismus, der die fingertragenden Führungsstücke zum Greifen linear verfährt.

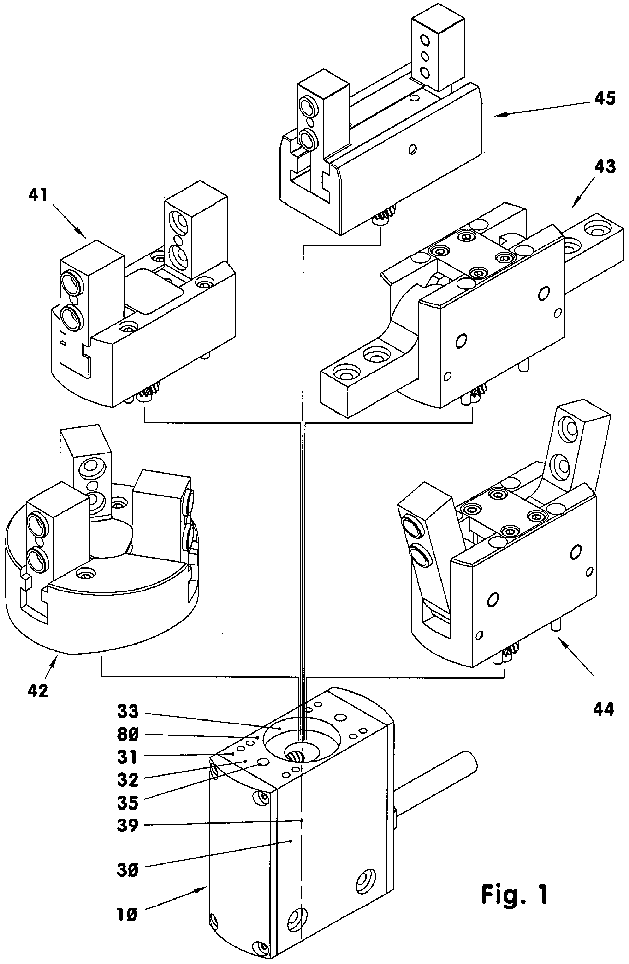

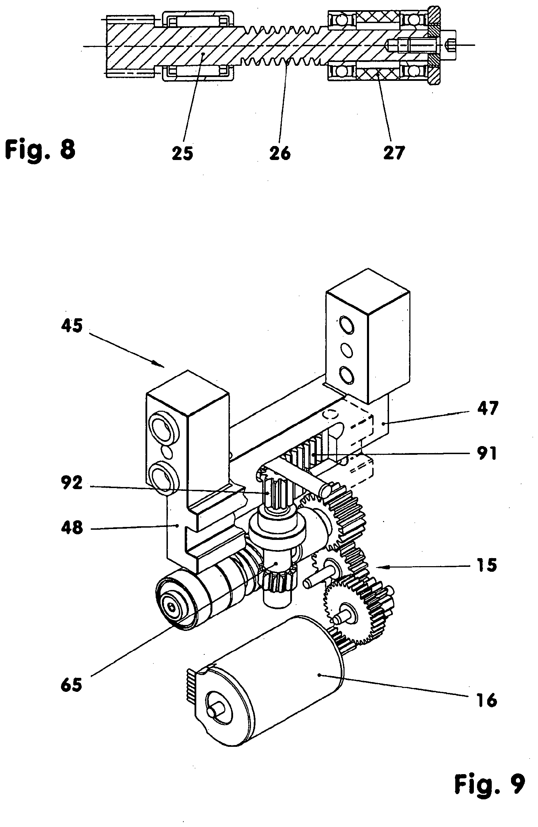

Die JP S63 102 886 A beschreibt einen Manipulativer, der über einen Seilzug parallelogrammgeführte Greifelemente bewegt. Bei der Variante nach Figur 9 gibt es keine Schnittstelle zwischen der greifertragenden Baugruppe und der seilbewegenden Baugruppe. In der Variante nach Figur 1 wirkt die seilbewegende Baugruppe über zwei Kegelradgetriebe auf die Greifelemente. Zwischen den Kegelradgetrieben befindet sich eine Schnittstelle. Die seilbewegende Baugruppe ist in mehreren hintereinander geschalteten Gehäusen untergebracht.

Der vorliegenden Erfindung liegt die Problemstellung zugrunde, ein Greifvorrichtungsmodulsystem zu entwickeln, bei dem ein Antriebsmodul mit verschiedenen Greifeinheitsmodulen auf einfache Weise herstellerseitig kombinierbar ist.

Diese Problemstellung wird mit den Merkmalen des Patentanspruchs 1 gelöst. Dabei sind die jeweilige Greifeinheit und der Antrieb mit seinen nachgeschalteten Getrieben in einem zweiteiligen, modular aufgebauten Modulgehäuse angeordnet. Der Antrieb und mindestens ein Getriebe stellen ein Antriebsmodul dar. Das Antriebsmodul weist einen Elektromotor und mindestens ein zumindest einstufiges Stirnradgetriebe auf. Die Greifelemente, deren Lagerungen und/oder Führungen sowie mindestens ein Getriebe bilden jeweils ein Greifeinheitsmodul. Das Antriebsmodul ist in einem Antriebsmodulgehäuse und das Greifeinheitsmodul in einem Greifeinheitsmodulgehäuse untergebracht. Die das Antriebsmodul und das Greifeinheitsmodul trennende Trenn- und Montagefuge liegt zwischen zwei Teilen eines Getriebes. Das Getriebe ist ein Schneckengetriebe, dessen erstes Getriebeteil eine Schnecke und dessen zweites Getriebeteil ein Schneckenrad ist. Der Elektromotor hat eine Antriebswelle, deren Mittellinie parallel zu der - durch die Trenn- und Montagefuge gebildete - Ebene ausgerichtet ist.

Bei Parallel- oder Mehrfingergreifern können die für die Führung im Gehäuse verwendeten, die Schlitten lagernden Führungsschienen fast beliebige Querschnitte haben. Neben dem im Ausführungsbeispiel gezeigten T-förmigen Querschnitt sind u.a. auch rechteckige, runde, ovale und sägezahnartige Querschnitte denkbar. Die Schlitten sind quer zur Greifrichtung allseitig abstützend gelagert. Sie können z.B. auch hintereinander in nur einer Führungsschiene, -nut oder -bohrung gelagert sein.

Ferner können hier je nach Greifaufgabe auch Führungsschienen eingesetzt werden, die z.B. tragfähig sind oder eine verschleißfeste oder reibungsarme Oberfläche aufweisen. Je nach Werkstoffwahl lassen sich diese Eigenschaften auch kombinieren.

Angetrieben werden die Schlitten - oder bei Winkelgreifern die Greifelementeträger - beispielsweise über mehrere hintereinander angeordnete Getriebe, z.B. ein Stirnradgetriebe, ein Schneckengetriebe und ein Spindel- oder Kurvengetriebe. Anstelle dieser Getriebe oder zusätzlich zu diesen können auch Schiebekeilgetriebe, Hebel-, Kulissen- oder Zugmittelgetriebe eingesetzt werden.

Die Greifeinheiten des Greifvorrichtungsmodulsystems können sowohl in Außen- als auch in Innengreifern verwendet werden.

Das Antriebsmodul und das Greifeinheitsmodul wird im Werk des Herstellers oder von dessen Mitarbeitern außerhalb des Herstellerwerks, z.B. beim Kunden, kombiniert.

Ein Aufeinanderzubewegen der Greifelemente tragenden Schlitten gilt auch für Greifelemente, deren Schlitten in nebeneinander liegenden Schlittenführungsnuten geführt sind.

Weitere Einzelheiten der Erfindung ergeben sich aus den Unteransprüchen und der nachfolgenden Beschreibung schematisch dargestellter Ausführungsformen.
- Figur 1:: Greifvorrichtungsmodulsystem mit z.B. fünf verschiedenen Greifeinheitsmodulen zu einem Antriebsmodul;

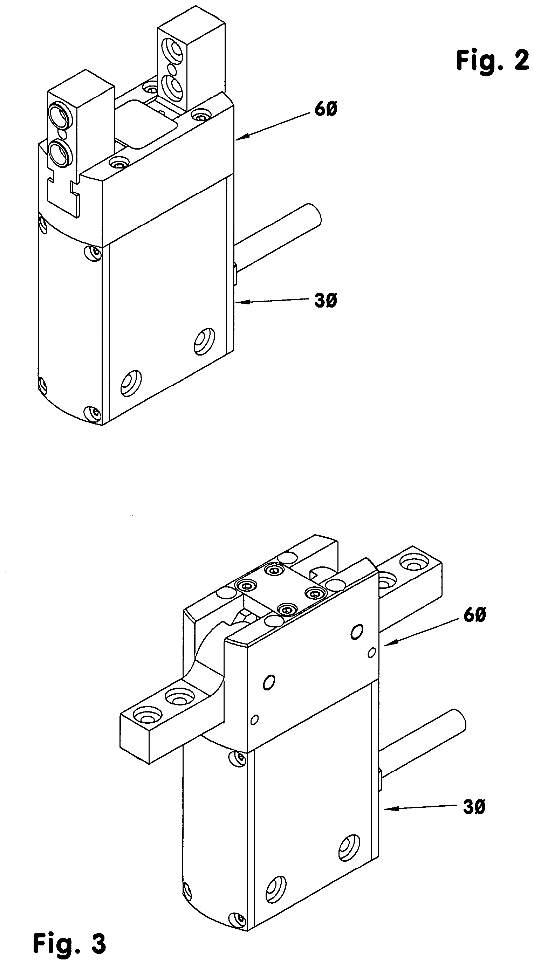

- Figur 2:: Perspektivische Ansicht einer Parallelgreifvorrichtung;
- Figur 3:: Perspektivische Ansicht einer Großwinkelgreifvorrichtung;
- Figur 4:: Perspektivische Ansicht einer Parallelgreifvorrichtung ohne Gehäuseteile;
- Figur 5:: Perspektivische Ansicht einer Kleinwinkelgreifvorrichtung ohne Gehäuseteile;
- Figur 6:: Schnitt durch das Greifeinheitsmodul eines Parallelgreifers;
- Figur 7:: Schnitt durch das Greifeinheitsmodul eines Winkelgreifers;
- Figur 8:: Schnitt durch die Spindelwelle des Antriebsmoduls;
- Figur 9:: Perspektivische Ansicht einer Parallelgreifvorrichtung ohne Gehäuseteile;
- Figur 10:: Schnitt durch das Greifeinheitsmodul der Parallelgreifvorrichtung nach Figur 9.

Die Figur 1 zeigt mehrere Komponenten eines Greifvorrichtungsmodulsystems. Ein einzelnes Greifvorrichtungsmodul besteht aus einem Antriebsmodul und einem Greifeinheitsmodul. Beide Module sind starr miteinander verschraubt. Das eine Antriebsmodul ist mit verschiedenen Greifvorrichtungsmodulen kombinierbar. Hier sind nur beispielhaft fünf Greifvorrichtungsmodule dargestellt: zwei Parallelgreifer (41) und (45), ein Dreifingergreifer (42), ein Großwinkelgreifer (43), dessen Greifarme jeweils um z.B. 90 Winkelgrade verschwenkbar sind, und ein Kleinwinkelgreifer (44), dessen Greifarme einen Schwenkwinkel von z.B. 15 bis 20 Winkelgraden abdecken.

Das Antriebsmodul ist in einem Antriebsmodulgehäuse eingebaut. Dieses Gehäuse ist z.B. ein quaderförmiger Körper, der an seinen beiden kleinen Seitenflächen je einen Deckel trägt. Jeder Deckel ist mit vier Schrauben fixiert. Zwischen den einander gegenüberliegenden Deckeln befindet sich eine Vielzahl von Ausnehmungen, die einen bürstenlosen Elektromotor (16), ein mehrstufiges Stirnradgetriebe und eine zu einem Schneckengetriebe gehörende Antriebsmodulabtriebswelle (25) aufnehmen und ggf. auch lagern. Des Weiteren ist dort eine elektronische Steuer- und Auswerteeinrichtung untergebracht, die für die Ansteuerung des Elektromotors, für die Abfrage von Sensoren und für die mögliche optische oder akustische Anzeige von verschiedenen Betriebszuständen zuständig ist.

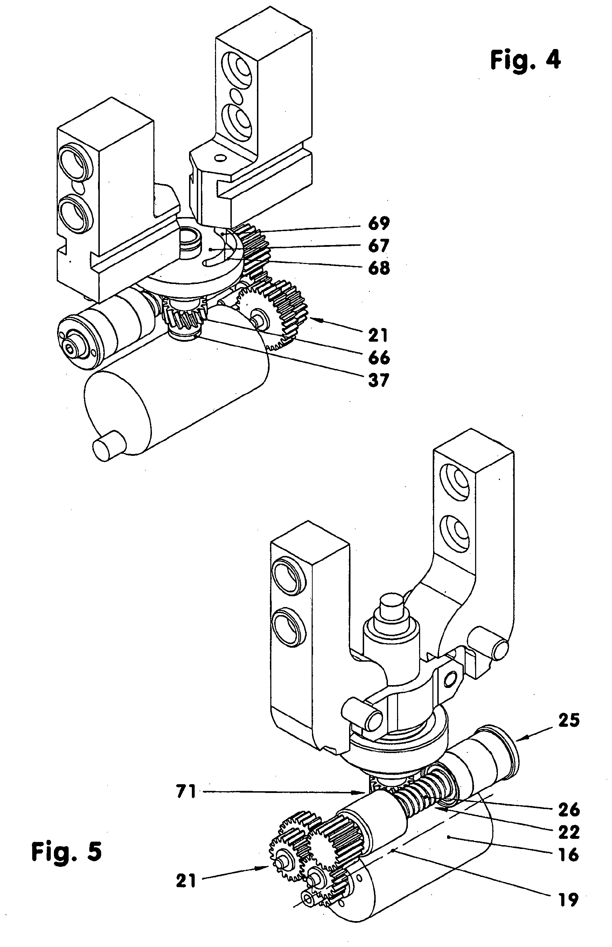

Nach den Figuren 4 und 5 wirkt der Elektromotor über ein erstes Getriebe (21), ein Stirnradgetriebe mit geradverzahnten Zähnen, auf die Antriebsmodulabtriebswelle (25). Ein motorseitiges Stirnrad treibt eine im Gehäuse gelagerte Nebenwelle an. Letztere kämmt mit ihrem großen Nebenwellenrad mit dem motorseitigen Stirnrad. Das kleine Nebenwellenrad treibt ein Zwischenrad an, das wiederum mit einem eingangsseitigen Stirnrad der Antriebsmodulabtriebswelle kämmt. Das Zwischenrad und die Nebenwelle sind gleitgelagert.

Die Antriebsmodulabtriebswelle (25), vgl. Figur 8, ist in ihrem mittleren Abschnitt als z.B. eingängige Schnecke (26) ausgebildet. Modul und Steigung der Schnecke sind so gewählt, dass zwischen der Schnecke und dem mit ihr kämmenden Schneckenrad (66), vgl. Figuren 4 und 5, Selbsthemmung vorliegt, d.h. die Schnecke kann nicht über das Schneckenrad angetrieben werden.

Zwischen dem eingangsseitigen Stirnrad und der Schnecke ist ein mit Außenring ausgestattetes Nadellager positioniert, dessen Nadeln direkt auf der Antriebsmodulabtriebswelle abrollen. Nach Figur 8 sind rechts neben der Schnecke (26) zwei auf der Antriebsmodulabtriebswelle axial fixierte Rillenkugellager befestigt. Zwischen ihren Außenringen ist beispielsweise ein rohrförmiger Elastomerkörper (27) angeordnet. Der Elastomerkörper ermöglicht ein kurzzeitiges reversibles axiales Nachgeben der Antriebsmodulabtriebswelle. Ggf. kann der Elastomerkörper auch durch eine Schraubenfeder oder durch ein starres Rohr ersetzt werden.

Die Kombination aus den Rillenkugellagern und dem rohrförmigen Körper (27) sitzt axial fixiert im Antriebsmodulgehäuse.

In der Oberseite (31) des Antriebsmodulgehäuses, vgl. Figur 1, befindet sich zentral eine Stufenbohrung. Ihr oberer Bereich, dessen Durchmesser geringfügig kleiner ist als die Gehäusebreite, dient der Aufnahme oder Lagerung der Eingangswelle des angebauten Greifeinheitsmoduls. Im mittleren Bereich der Stufenbohrung ist die Schnecke zu erkennen. Ein hier nicht sichtbarer unterer Bereich der Stufenbohrung ist ein sacklochartiger Abschnitt, in dem z.B. eine Gleitlagerhülse (37) sitzt, vgl. Figur 4, in der sich die Antriebswelle (65) des Greifeinheitsmoduls abstützt. In der Oberseite (31) befinden sich neben den Stufenbohrungen acht Gewindebohrungen, von denen je eine Gruppe aus vier Bohrungen dem Befestigen des Greifeinheitsmodulgehäuses dient.

Die Greifeinheitsmodulgehäuse des Parallelgreifers, des Großwinkelgreifers und des Kleinwinkelgreifers haben zumindest annähernd eine quaderförmige Gestalt. Ihre kleinen Seitenflächen haben die Krümmung eines Zylindermantels, dessen Mittellinie mit der Gehäusemittellinie des Antriebsmodulgehäuses zusammenfällt. Der Dreifingergreifer hat ein scheibenförmiges Gehäuse, dessen Krümmung der Zylindermantelkrümmung der zuvor genannten kleinen Seitenflächen entspricht.

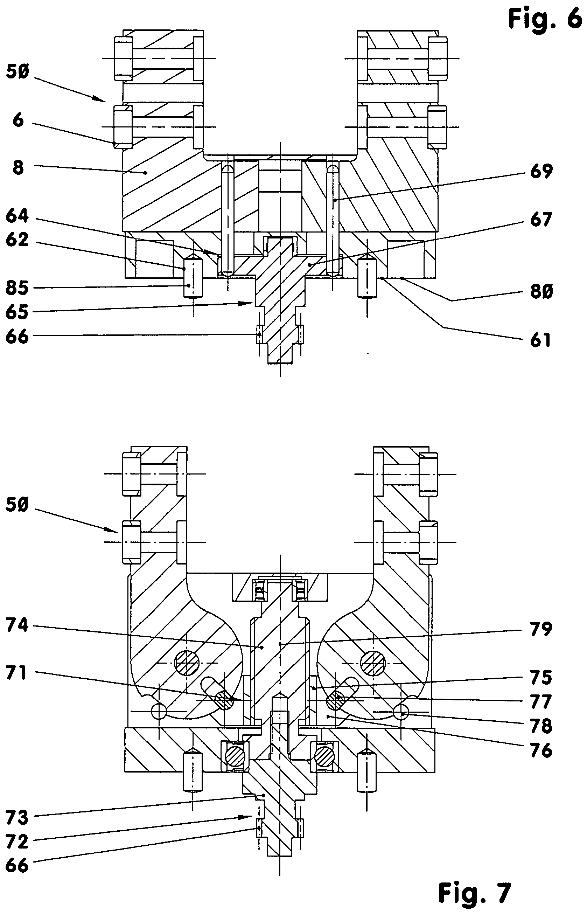

In dem Greifeinheitsmodulgehäuse des Parallelgreifers und des Dreifingergreifers sind Schlittenführungsnuten angeordnet, in denen Schlitten geführt sind, die anbaubare Greifelemente tragen, vgl. Figur 1. In den Ausführungsbeispielen werden keine Greifelemente gezeigt. In einer in der Unterseite des Greifeinheitsmodulgehäuses (60) angeordneten Stufenbohrung sitzt, ggf. verliersicher, eine Antriebswelle (65) mit einer z.B. angeformten zylindrischen Kurvenscheibe (67). Die Antriebswelle (65) ist z.B. in einer Gleitlagerbüchse axial und radial gelagert, vgl. Figur 6.

Die Kurvenscheibe (67) hat pro Schlitten eine Führungsnut, in die ein Mitnahmestift (69) eingreift, der im Schlitten befestigt ist, vgl. auch Figur 4. Das untere Ende des Mitnahmestifts (69) liegt an mindestens einer Flanke der jeweiligen Führungsnut (68) an. Die Führungsnut (68) ändert ihren Abstand zur Mittellinie der Antriebswelle (65) entlang des Umfangs. Nach Figur 4 krümmt sich die Führungsnut (68) vom Zentrum aus zum Rand der Kurvenscheibe (67) hin. Bei einer Schwenkbewegung der Kurvenscheibe (67) um z.B. 60 bis 90 Winkelgrade verfährt der entsprechende Schlitten in seiner Schlittenführungsnut zwangsläufig mehrere Millimeter.

Anstelle der Kurvenscheibe (67) kann auch eine Exzenterscheibe verwendet werden. Ihre Außenkontur entspricht dann bereichsweise den zentrumsnahen Flanken der Führungsnuten der zuvor beschriebenen Kurvenscheibe. Da hier die Zwangsführung entfällt, muss der jeweilige Schlitten mit seinem Mitnahmestift mittels Federkraft gegen die Exzenterscheibe gedrückt werden.

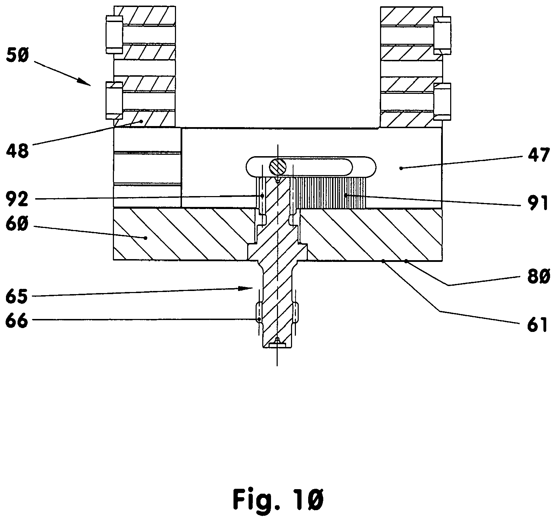

Die Figur 9 zeigt einen Parallelgreifer (45), vgl. auch Figur 1, bei dem im Greifereinheitsmodulgehäuse (60) zwei zueinander parallel verfahrbare Schlitten (47, 48) angeordnet sind. Beide Schlitten (47, 48) sitzen in einer gemeinsamen Führungsnut, wobei sie sich über einander gegenüberliegende Flanken kontaktieren. In jeder der beiden Flanken ist ein Zahnstangenabschnitt (91), z.B. zurückgesetzt, eingearbeitet oder eingebaut. Die Zahnstangenabschnitte (91) kämmen mit einem Synchronrad (92), das z.B. Teil der Antriebswelle (65) ist, vgl. auch Figur 10.

In den Großwinkel- und Kleinwinkelgreifern werden anstelle der Schlitten im Greifeinheitsmodulgehäuse schwenkbare Greifelementeträger gelagert. Letztere sitzen beispielsweise gleit- oder wälzgelagert auf zylindrischen Lagerbolzen. Zwischen den Greifelementeträgern befindet sich jeweils eine vertikale Ausnehmung, in der nach Figur 5 ein Spindelgetriebe (71) zur Realisierung der Schwenkbewegung der Greifelementeträger angeordnet ist.

Die Antriebswelle (72) ist Teil des Spindelgetriebes (71). Sie besteht nach Figur 7 aus dem unteren Schneckenradteil (73) und dem darauf aufgeschraubten oberen Spindelteil (74). Das Schneckenradteil und das Spindelteil sind verdrehgesichert verbunden. Sie haben jeweils einen Flanschkragen, zwischen dem ein größeres Rillenkugellager über seinen Innenring eingespannt ist. Das Rillenkugellager stützt sich in der Stufenbohrung des Greifeinheitsmodulgehäuses ab. Der Außenring des Lagers liegt zur axialen Fixierung an der Oberseite des Antriebsmodulgehäuses an. Das obere Ende des Spindelteils sitzt in einem Wälzlager, das von einer am Greifeinheitsmodulgehäuse verschraubten Trägerplatte aufgenommen wird.

Beim angetriebenen Rotieren der Antriebswelle schraubt die Spindel, nach Figur 7, eine auf ihr sitzende Mutter nach oben. Da die Mutter beidseitig Gabelarme aufweist, die jeweils einen Mitnahmebolzen tragen, der zudem jeweils in eine Mitnahmenut des einzelnen Greifelementeträgers eingreift, werden die Greifelementeträger nach außen geschwenkt.

Die Greifeinheitsmodulgehäuse haben jeweils eine plane Unterseite (61), in der hier zwei Passstifte zum zentrierten Aufsetzen auf das Antriebsmodulgehäuse angeordnet sind, vgl. Figuren 6 und 7.

Beide Gehäusemodule werden so miteinander verschraubt, dass die Unterseite des Greifeinheitsmodulgehäuses auf der Oberseite des Antriebsmodulgehäuses aufliegt. Beispielsweise werden beiden Gehäusemodule z.B. mit vier Schrauben befestigt, wobei die Mittellinien der Schrauben senkrecht zur Oberseite des Antriebsmodulgehäuses orientiert sind. Zwischen der Unterseite des Greifeinheitsmodulgehäuses und der Oberseite des Antriebsmodulgehäuses befindet sich die Trenn- und Montagefuge (80).

Sollten im Greifeinheitsmodulgehäuse Sensorabfragen erforderlich sein, so werden die entsprechenden Sensoren, z.B. Hallsensoren, im Antriebsmodulgehäuse so befestigt, dass sie in das Greifeinheitsmodulgehäuse von unten her hineinragen. Die Sensoren und/oder ihre Träger stehen somit über die Oberseite des Antriebsmodulgehäuses über.

### Bezugszeichenliste:

- 6: Zentrierhülsen
- 8: vertikale Mittenlängsebene

- 10: Antriebsmodul

- 15: Antrieb
- 16: Elektromotor, bürstenlos
- 19: Mittellinie

- 21: erstes Getriebe, Stirnradgetriebe
- 22: zweites Getriebe, Schneckengetriebe

- 25: Antriebsmodulabtriebswelle
- 26: Getriebeteil antreibend, Schnecke
- 27: Körper, rohrförmig, ggf. elastisch

- 30: Antriebsmodulgehäuse, Gehäuseteil
- 31: Oberseite
- 32: Ebene
- 33: Stufenbohrung

- 35: Passbohrungen
- 37: Gleitlagerhülse
- 39: Gehäusemittellinie

- 41: Greifeinheit, Parallelgreifer, Schlitten hintereinander
- 42: Greifeinheit, Dreifingergreifer
- 43: Greifeinheit, Großwinkelgreifer
- 44: Greifeinheit, Kleinwinkelgreifer
- 45: Greifeinheit, Parallelgreifer, Schlitten nebeneinander
- 47, 48: Schlitten

- 50: Greifeinheitsmodul

- 60: Greifeinheitsmodulgehäuse, Gehäuseteil
- 61: Unterseite
- 62: Passbohrungen

- 64: Kurvengetriebe
- 65: Getriebewelle, Antriebswelle
- 66: Getriebeteil angetrieben, Schneckenrad, unecht
- 67: Kurvenscheibe
- 68: Führungsnut
- 69: Mitnahmestift

- 71: Spindelgetriebe
- 72: Getriebewelle, Antriebswelle
- 73: Schneckenradteil
- 74: Spindelteil

- 75: Spindelmutter
- 76: Gabelarme
- 77: Mitnahmebolzen, partiell zweiseitig abgeflacht
- 78: Anschlagbolzen
- 79: Mittellinie

- 80: Trenn- und Montagefuge
- 85: Passstifte

- 91: Zahnstangenabschnitt
- 92: Synchronrad

## Patentansprüche

1. Greifvorrichtungsmodulsystem mit verschiedenen Greifeinheiten (41-45), wobei jede Greifeinheit (41-45) mit mindestens zwei aufeinander zubewegbaren - auf Schlitten oder Greifelementeträgern angeordneten - Greifelementen ausgestattet ist, von denen mindestens ein Greifelement mittels eines Antriebs (15) in eine oder zwei Richtungen bewegbar ist und wobei der Antrieb (15) mindestens ein Getriebe (21) umfasst,
- wobei die jeweilige Greifeinheit (41-45) und der Antrieb (15) mit seinen nachgeschalteten Getrieben (21, 22, 64, 71) in einem zweiteiligen, modular aufgebauten Modulgehäuse (30, 60) angeordnet sind,
- wobei der Antrieb (15) und mindestens ein Getriebe (21) ein Antriebsmodul (10) darstellen,
- wobei das Antriebsmodul (10) einen Elektromotor (16) und mindestens ein zumindest einstufiges Stirnradgetriebe (21) aufweist,
- wobei die Greifelemente, deren Lagerungen und/oder Führungen sowie mindestens ein Getriebe (64, 71) jeweils ein Greifeinheitsmodul (50) bilden,
- wobei das Antriebsmodul (10) in einem Antriebsmodulgehäuse (30) und das Greifeinheitsmodul (50) in einem Greifeinheitsmodulgehäuse (60) untergebracht ist,
- wobei die das Antriebsmodul (10) und das Greifeinheitsmodul (50) trennende Trenn- und Montagefuge (80) zwischen zwei Teilen (26, 66) eines zweiteiligen Getriebes (22) liegt,
- wobei das zweiteilige Getriebe (22) ein Schneckengetriebe ist, dessen erster Getriebeteil (26) eine Schnecke und dessen zweiter Getriebeteil (66) ein Schneckenrad ist und
- wobei der Elektromotor (16) eine Antriebswelle hat, deren Mittellinie (19) parallel zu der - durch die Trenn- und Montagefuge (80) gebildete - Ebene (32) ausgerichtet ist.

2. Greifvorrichtungsmodulsystem nach Anspruch 1, **dadurch gekennzeichnet, dass** der Aufbau des Antriebsmoduls (10) für alle Greifeinheitsmodule identisch aufgebaut ist.

3. Greifvorrichtungsmodulsystem nach Anspruch 1, **dadurch gekennzeichnet, dass** die Unterseite (61) des Greifeinheitsmodulgehäuses (60) und die Oberseite (31) des Antriebsmodulgehäuses (30) - beide kontaktieren einander zumindest partiell und bilden so die Trenn- und Montagefuge (80) - jeweils zwei Passbohrungen (35, 62) aufweisen, in die zur gegenseitigen Zentrierung der Gehäuseteile (30, 60) Passstifte (85) eingesetzt sind.

4. Greifvorrichtungsmodulsystem nach Anspruch 1, **dadurch gekennzeichnet, dass** die Trenn- und Montagefuge (80) im Bereich der Wandungen der Modulgehäuseteile (30, 60) zu mehr als 25 Flächenprozent eine Ebene (32) bildet.

5. Greifvorrichtungsmodulsystem nach Anspruch 3, **dadurch gekennzeichnet, dass** die Mittellinien der Passstifte (85) in einer vertikalen Mittenlängsebene (8) angeordnet sind.

6. Greifvorrichtungsmodulsystem nach Anspruch 1, **dadurch gekennzeichnet, dass** aus der - einen Teil der Trenn- und Montagefuge (80) bildenden - Unterseite (61) des Greifeinheitsmodulgehäuses (60) eine Antriebswelle (65) herausragt, deren Mittellinie senkrecht zur Ebene (32) ausgerichtet ist.

## Claims

1. Modular gripping device system with various gripping units (41-45), wherein each gripping unit (41-45) is equipped with at least two gripping elements which are arranged on carriages or gripping element carriers, and which are movable toward each other, of which at least one gripping element is movable in one or two directions by means of a drive (15), and wherein the drive (15) comprises at least one transmission (21),
- wherein the respective gripping unit (41-45) and the drive (15) with its downstream transmissions (21, 22, 64, 71) are arranged in a two-part, modular module housing (30, 60),
- wherein the drive (15) and at least one transmission (21) represent a drive module (10),
- wherein the drive module (10) has an electric motor (16) and at least one single-stage spur gear transmission (21),
- wherein the respective gripping elements, their bearings and/or guides and at least one transmission (64, 71) each form a gripping unit module (50),
- wherein the drive module (10) is housed in a drive module housing (30) and the gripping unit module (50) in a gripping unit module housing (60),
- wherein the separating and mounting joint (80) separating the drive module (10) and the gripping unit module (50) is located between two parts (26, 66) of a two-part transmission (22),
- wherein the two-part transmission (22) is a worm gear transmission, the first transmission part (26) of which is a worm and the second transmission part (66) of which is a worm wheel, and
- wherein the electric motor (16) has a drive shaft, the centre line (19) of which is aligned parallel to the plane (32) formed by the separating and mounting joint (80).

2. Modular gripping device system according to claim 1, **characterized in that** the design of the drive module (10) is identical for all gripping unit modules.

3. Modular gripping device system according to claim 1, **characterized in that** the underside (61) of the gripping unit module housing (60) and the upper side (31) of the drive module housing (30) - both making contact with each other at least partially and thus forming the separating and mounting joint (80) - each have two mating holes (35, 62) in which alignment pins (85) are inserted for the mutual centring of the housing parts (30, 60).

4. Modular gripping device system according to claim 1, **characterized in that** more than 25 percent of the surface of the separating and mounting joint (80) forms a plane (32) in the region of the walls of the module housing parts (30, 60).

5. Modular gripping device system according to claim 3, **characterized in that** the centre lines of the alignment pins (85) are arranged in a vertical centre longitudinal plane (8).

6. Modular gripping device system according to claim 1, **characterized in that** a drive shaft (65) protrudes from the underside (61) of the gripping unit module housing (60), which underside (61) forms a part of the separating and mounting joint (80), the centre line of which drive shaft (65) is aligned perpendicular to the plane (32).

## Revendications

1. Système modulaire de dispositif préhenseur, doté de différentes unités de préhension (41 à 45), chaque unité de préhension (41 à 45) étant équipée d'au moins deux éléments préhenseurs mobiles l'un vers l'autre - placés sur des chariots ou sur des supports d'éléments préhenseurs -, dont au moins un élément préhenseur est mobile à l'aide d'un entraînement (15) dans une ou dans deux directions et l'entraînement (15) comprenant au moins une transmission (21),
- l'unité de préhension (41 à 45) respectif et l'entraînement (15) avec ses transmissions (21, 22, 64, 71) montées en aval étant placés dans un boîtier de module (30, 60) en deux éléments, de structure modulaire,
- l'entraînement (15) et au moins une transmission (21) représentant respectivement un module d'entraînement (10),
- le module d'entraînement (10) comportant un moteur électrique (16) et au moins un réducteur (21) à engrenages cylindriques au moins mono-étagé,
- les éléments préhenseurs, leurs paliers et/ou guidages ainsi qu'au moins une transmission (64, 71) formant respectivement un module d'unité de préhension (50),
- le module d'entraînement (10) étant logé dans un boîtier (30) de module d'entraînement et le module d'unité de préhension (50) étant logé dans un boîtier (60) de module d'unité de préhension,
- le joint (80) de séparation et de montage qui sépare le module d'entraînement (10) et le module d'unité de préhension (50) se situant entre deux parties (26, 66) d'une transmission (22),
- la transmission (22) en deux éléments étant une vis sans fin dont la première partie (26) de transmission est une vis et dont la deuxième partie (66) de transmission est une roue hélicoïdale, et
- le moteur électrique (16) ayant un arbre d'entraînement dont la ligne médiane (19) est orientée à la parallèle du plan (32) formé par le joint (80) de séparation et de montage.

2. Système modulaire de dispositif préhenseur selon la revendication 1, **caractérisé en ce que** la structure du module d'entraînement (10) est identique pour tous les modules d'unité de préhension.

3. Système modulaire de dispositif préhenseur selon la revendication 1, **caractérisé en ce que** la face inférieure (61) du boîtier (60) de module d'unité de préhension et la face supérieure (31) du boîtier (30) de module d'entraînement - les deux sont en contact mutuel au moins partiel et forment ainsi le joint (80) de séparation et de montage - comportent chacune deux alésages de positionnement (35, 62), dans lesquels sont insérées des goupilles d'ajustage (85) pour le centrage réciproque des parties (30, 60) de boîtier.

4. Système modulaire de dispositif préhenseur selon la revendication 1, **caractérisé en ce que** dans la zone des parois des parties (30, 60) de boîtier de module, le joint (80) de séparation et de montage forme à raison de plus de 25 pour cent de la surface un plan (32).

5. Système modulaire de dispositif préhenseur selon la revendication 3, **caractérisé en ce que** les lignes médianes des goupilles d'ajustage (85) sont placées dans un plan médian longitudinal (8) vertical.

6. Système modulaire de dispositif préhenseur selon la revendication 1, **caractérisé en ce qu'**à partir de la face inférieure (61) du boîtier (60) de module d'unité de préhension, formant une partie du joint (80) de séparation et de montage, saillit un arbre d'entraînement (65) dont la ligne médiane est orientée à la perpendiculaire du plan (32).
